# EUROPÄISCHE PATENTSCHRIFT

(11) **EP 3 326 897 B1**
(45) Veröffentlichungstag und Bekanntmachung des Hinweises auf die Patenterteilung: **27.03.2019**
(21) Anmeldenummer: 17001702.4
(22) Anmeldetag: 16.10.2017
(51) Int. Cl.: B62M 6/55, B62M 11/06, F16H 3/089, F16H 3/10

(54) **GANGSCHALTUNG FÜR EINEN ELEKTROMOTIRSCHEN FAHRRAD-ZUSATZANTRIEB**
GEAR SHIFTING FOR AN ADDITIONAL BICYCLE DRIVE POWERED BY AN ELECTRIC MOTOR
CHANGEMENT DE VITESSES POUR UN ENTRAÎNEMENT SUPPLÉMENTAIRE DE BICYCLETTE À MOTEUR ÉLECTRIQUE

(30) Priorität: 25.11.2016 DE 102016014066
(43) Veröffentlichungstag der Anmeldung: 30.05.2018
(73) Patentinhaber: Oechsler AG, 91522 Ansbach (DE)
(72) Erfinder: Motzet, Daniel, 91522 Ansbach (DE); Gress, Florian, D - 91522 Ansbach (DE); Naepfel, Matthias, D - 90592 Schwarzenbruck (DE)
(74) Vertreter: Führing, Dieter

(56) Entgegenhaltungen:
- DE-A1-102016 121 859
- JP-A- H10 194 186
- JP-A- H11 240 481

## Beschreibung

Die Erfindung betrifft eine für einen elektromotorischen Fahrrad-Zusatzantrieb ausgelegte Gangschaltung gemäß dem Oberbegriff des Patentanspruches 1.

Ein derart ausgestatteter Zusatzantrieb ist aus der DE 10 2014 009 833 B4 bekannt. Auf einem Hohlrad eines Planetengetriebes werden die Drehmomentenbeiträge von einer Kurbelwelle über dessen Planetenträger, bei arretierter Sonne, und von einer Antriebswelle über ein Stirnradgetriebe zusammengeführt. Das Hohlrad treibt eine dort mit einem Kettenblatt als Zugmittelrad ausgerüstete Hohlwelle, die auf der Kurbelwelle gelagert ist. Das Hohlrad steht über einen Freilauf ständig mit der Hohlwelle in Eingriff. Dadurch wird dieser Antrieb überholt, wenn und solange die Hohlwelle vom Hohlrad über ein parallelgeschaltetes Getriebe schneller angetrieben wird. Zum Umschalten wird das Eingangsrad dieses Getriebes mittels auf der Welle des Planetengetriebes axial verschiebbarer Klauen drehstarr mit dem Hohlrad verbunden. Wie diese, als Gangschaltung dienende, Verschiebung vollzogen wird, ist in dem Patent nicht offenbart; auch nicht, wie es bedarfsweise apparativ möglich wäre, im Interesse möglichst lastsprungfreien, gleichmäßigen Pedalierens die dort beschriebene Einrichtung um weitere Gänge zu ergänzen.

Aus der JP 10194186 A ist es bekannt, in den abhängig vom eingebrachten Pedalmoment angesteuerten elektromotorischen Zusatzantrieb eine automatische Mehrgangschaltung zu integrieren.

In Erkenntnis der eingangs erörterten Gegebenheiten liegt vorliegender Erfindung die Aufgabe zugrunde, die beiden einander überlagerten Drehmomente konstruktiv einfacher auf die Gangschaltung zu übertragen; und diese dafür auszulegen, dass sie im Interesse optimaler Leistungsbemessung funktional problemlos auf weitere Gangstufen über zwei Gänge hinaus erweiterbar ist, zwischen denen ein vollautomatisches Umschalten anzustreben ist.

Diese Aufgabe ist durch das Zusammenwirken der im Patentanspruch 1 angegebenen wesentlichen Merkmale gelöst. Danach werden die beiden Drehmomenten-Beiträge, erforderlichenfalls über Getriebe, in ein Koppelrad eingeführt, das in Drehverbindung mit einer Zentralwelle steht. Abgesehen von einem im Fahrbetrieb mit der Zentralwelle drehfest verbundenen Ritzel der niedersten Gangstufe sind auf der Zentralwelle unterschiedlich bemessene, mit Triebrädern kämmende Ritzel verdrehbar gelagert, vorzugsweise wälzgelagert. Zu umsteuerbarem Kupplungseingriff sind die Ritzel mit der Zentralwelle über Kupplungsräder, vorzugsweise ausgelegt als axial verschiebbare Klauenräder, drehfest koppelbar, welche dazu ihrerseits mit der Zentralwelle in Drehverbindung stehen oder verbringbar sind.

Der Gangschaltung unterworfen ist also nicht der auf Muskelkraft beruhende Drehmomentenbeitrag von der Kurbelwelle und auch nicht der vom Zusatzantrieb gelieferte Drehmomentenbeitrag; sondern erst das auf den Abtrieb einwirkende resultierende Drehmoment.

Zum Umschalten durch Axialverlagerung der Kupplungsräder oder der Ritzel relativ zueinander kann ein elektromagnetisch initiierter Längshub in Betracht kommen; es ist aber vorzugsweise vorgesehen, dass ein Servomotor eine gewindeähnlich mit großer Steigung gewundene Kulisse in der Mantelfläche einer Schaltwelle um einen beschränkten Winkel verdreht; wobei in die Kulisse beispielsweise eine Schaltgabel mit einem Bolzen eingreift. Eine solche Schaltgabel ist gemäß einer U-Geometrie berandet. Eine umlaufende Nut im, an der Zentralwelle drehfesten aber längs ihr axial verlagerbaren, Klauen-Kupplungsrad wird von den radial eingreifenden U-Schenkeln teil-umgriffen. Es kann aber auch ein für den umsteuerbaren Kupplungseingriff axial verlagerbares Ritzel vorgesehen sein.

Eine Erweiterung solcher kompaktbauenden und betriebszuverlässigen, elektromotorisch betätigbaren automatischen Gangschaltung auf weitere Gangstufen ist ohne weiteres dadurch möglich, dass zusätzliche Ritzel-Triebrad-Paarungen unterschiedlicher Übersetzungen, gegebenenfalls samt Kupplungsrädern, axial gegeneinander versetzt auf der Zentralwelle beziehungsweise auf der Hohlwelle aufgereiht werden, mit zugeordneten Kulissenverläufen in der Schaltwelle. Durch Freiläufe wird bewirkt, dass immer nur das momentan am schnellsten rotierende Ritzel ein Drehmoment über das mit ihm kämmende Triebrad auf der Hohlwelle zum Zugmittelrad überträgt, die niedrigeren Gänge werden jeweils vom nächsthöheren überholt. Ein zusätzlicher Freilauf auf der Hohlwelle kann zum Rückwärtsdrehen des Zugmittelrades vorgesehen sein.

So kann durch bloßes Ansteuern des Servomotors zum Verdrehen der Schaltwelle mit der Kulisse für den Kupplungseingriff ein mit einem Triebrad kämmendes Ritzel an die Zentralwelle gekoppelt werden, um in dieser aktuellen Gangstufe die Hohlwelle mit dem Zugmittelrad anzutreiben. Die Ansteuerung des Servomotors erfolgt vollautomatisch nach Maßgabe der, von einem in das Umgehäuses des Zusatzantriebes integrierten Messwerk, aktuell ermittelten Betriebswerte für insbesondere das Drehmoment und / oder die Trittfrequenz an der Tretkurbel. Dafür müssen mangels externer Stellglieder und Sensoren keinerlei Kabel das Umgehäuse verlassen, was Beschädigungen und Fehleinstellungen vorbeugt. Vollautomatisch wird über eine dem Messwerk nachfolgende Steuerschaltung für den momentanen Leistungsbedarf das notwendige zusätzliche Drehmoment aus dem elektromotorischen Antrieb und die optimale Gangstufe für nicht unnötig schnelles Pedalieren ermittelt, wie es als solches aus der Pedelec-Messwertverarbeitung bekannt ist; und - auch unter Last, also ohne das Pedalieren anpassen oder gar vorübergehend unterbrechen zu müssen -, wird in die entsprechende Gangstufe gewechselt.

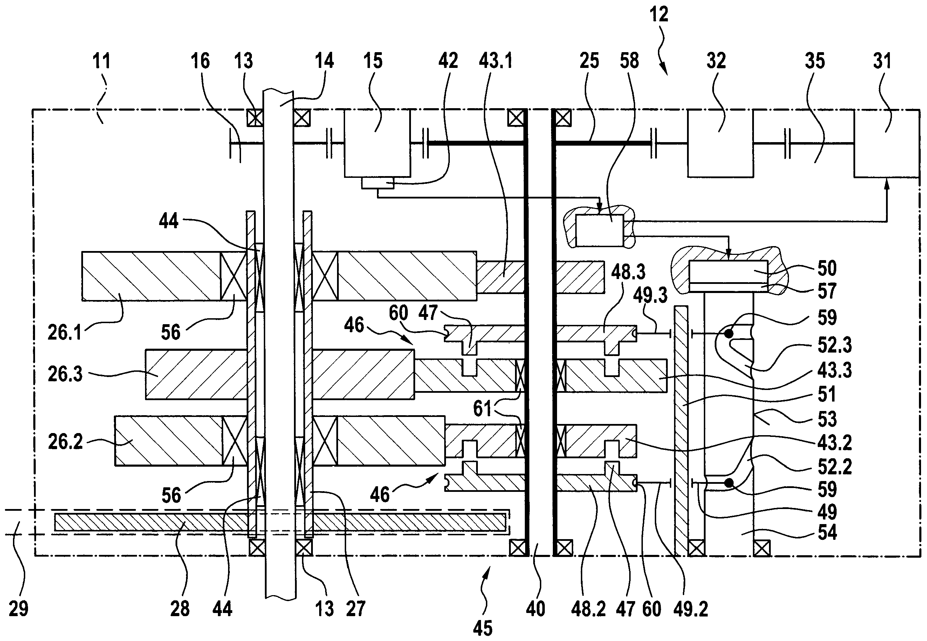

Zusätzliche Weiterbildungen und Abwandlungen der erfindungsgemäßen Lösung ergeben sich aus den weiteren Ansprüchen und, auch unter Berücksichtigung von deren Vorteilen, aus nachstehender Beschreibung eines unter Abstraktion auf das Funktionswesentliche skizzierten bevorzugten Realisierungsbeispiels zu dieser Erfindung. Die einzige Figur der Zeichnung zeigt eine Dreigangschaltung für einen elektromotorischen Fahrrad-Zusatzantrieb bei vereinfachter Darstellung der Drehmomentenüberlagerung und in die Darstellebene verschwenkt skizziertem Schaltungsgetriebe. Wenn nachstehend von drehfester Verbindung zwischen Welle und Rad die Rede ist, dann ist das immer auf die Bewegung in Fahrtrichtung bezogen; in Gegenrichtung, etwa bei Rückwärts-Pedalieren, ist zum Vermeiden von Selbstblockaden regelmäßig ein Freilauf zwischen Rad und Welle zweckmäßig.

Ein stabiles Umgehäuses 11 des elektromotorischen Zusatzantriebes 12 übernimmt, wie an einem Fahrradrahmen (nicht dargestellt), die Aufnahme eines Tretlagers 13 für die beidseitig aus dem Umgehäuse 11 hervorstehende Kurbelwelle 14 mit ihren Pedalen (nicht dargestellt) zum Muskelantrieb des Fahrrades.

Die Drehzahl der Kurbelwelle 14, die drehfest mit einem Stirnrad 16 bestückt ist, wird mittels eines Übersetzungsgetriebes 15 heraufgesetzt. Das treibt ein Koppelrad 25 samt seiner Zentralwelle 40 an. Wenn es sich beim Getriebe 15 um ein Planetengetriebe handelt, dann steht vorzugsweise dessen Hohlrad mit dem Stirnrad 16 in Eingriff, während die Sonne mit dem Koppelrad 25 und der Zentralwelle 40 koaxial in starrer Drehverbindung steht. Der Planetenträger dieses Planetengetriebes ist dann vorzugsweise über einen Stützarm stillgesetzt, unter Einwirkung auf ein gehäusefestes Drehmomenten-Messwerk 42.

Das Umgehäuse 11 beherbergt außerdem einen vorzugsweise hochtourigen elektromotorischen Antrieb 31. Dessen Drehzahl wird erforderlichenfalls mittels eines Untersetzungsgetriebes 32 herabgesetzt. Bei dem kann es sich insbesondere um ein Stirnradgetriebe handeln, oder um eine Transmission mit einem Zugmittel wie einer Kette, einem Zahnriemen oder einem Profilriemen. Auch ein Planetengetriebe mit unmittelbar auf der Antriebswelle 35 des Motors 31 sitzender Sonne kann Bestandteil dieses Untersetzungsgetriebes 32 sein.

Beide Getriebe 15, 32, also ausgelegt auch mit unterschiedlichen Getriebestufen oder -kombinationen, stehen ausgangsseitig in Eingriff mit dem Koppelrad 25; so dass hier die Drehmomenten-Beiträge von der Kurbelwelle 14 und von der Antriebswelle 35 einander für das Drehen der Zentralwelle 40 überlagert werden.

Die Zentralwelle 40 ist mit einem stirnverzahnten Ritzel 43 drehfest bestückt. Als dieses Ritzel (43) kann grundsätzlich auch das Koppelrad 25 dienen; zumal wenn es als Planetensonne ausgelegt ist, so dass nur eines der Getriebe 15, 32 mit der Stirnverzahnung des Koppelrades 25 kämmt. Im Interesse einer übersichtlicheren Beschreibung der Erfindung wird nachstehend aber an jener Stelle wie skizziert von einem separaten, dem Koppelrad 25 gegenüber axial versetzten Ritzel 43 ausgegangen, das - wie das Koppelrad 25 - drehfest mit der Zentralwelle 40 verbunden oder zum Betrieb verbindbar ist.

In der ersten Gangstufe der Drehmomentübertragung vom Koppelrad 25 auf ein Zugmittelrad 28 kämmt ein Ritzel 43.1 vergleichsweise kleinen Durchmessers mit einem dagegen großen Triebrad 26.1, mit welchem eine Hohlwelle 27 bestückt ist. Die Hohlwelle 27 ist mittels Wälzlagern 44 konzentrisch auf der Kurbelwelle 14 gelagert. Axial gegen das Triebrad 26 verlagert ist auf der Hohlwelle 27 das erwähnte Zugmittelrad 28 drehfest angeordnet. Das dient in konventioneller Weise dem Antrieb eines dem Umgehäuse 11 gegenüber versetzt am Fahrradrahmen gelagerten Hinterrades (nicht dargestellt) über ein Zugmittel 29, etwa über eine Kette, einen Zahnriemen oder einen Profilriemen.

Insoweit eine änderbare Übersetzung zwischen Zentralwelle 40 und Hohlwelle 27 vorliegt, handelt es sich hier um eine Gangschaltung 45. Da deren erster Gang nicht der größte ist, ist zwischen dem Triebrad 26.1 und seiner Hohlwelle 27 ein Freilauf 56 vorgesehen.

Für den zweiten Gang mit seiner höheren Stirnrad-Übersetzung steht ein zweites Ritzel 43.2 in Eingriff mit einem weiteren Triebrad 26.2. Wenn es sich bei diesem zweiten Gang um den höchsten Gang dieser Gangschaltung 45 handelt, sind die Hohlwelle 27 und das Triebrad 26.2 im Betrieb drehfest miteinander verbunden. Andernfalls liegt zwischen dem Triebrad 26.2 und seiner Hohlwelle 27 ebenfalls ein Freilauf 56, um sich von der nächsthöheren Gangstufe übertouren lassen zu können.

Dieses weitere, zweite Ritzel 43.2 ruht mittels eines Wälzlagers 61 auf der Zentralwelle 40. Es steht deshalb an sich nicht in Drehverbindung mit der Zentralwelle 40, es kann aber - wenn nicht das Ritzel (43) selbst axial verlagerbar ist - mittels eines Kupplungsrades, etwa eines Klauenrades 48.2, drehfest an sie angekuppelt (und auch wieder von ihr gelöst) werden; was nachstehend als Umsteuern des Kupplungseingriffes bezeichnet wird.

Solch ein Klauenrad 48.2 ist für den Kupplungsvorgang längs der Zentralwelle 40 axial verlagerbar, es rotiert aber mit dieser. Vor einer axialen Stirnfläche weist das für den Kupplungsvorgang hier bevorzugt eingesetzte Klauenrad 48.2 achsparallel orientierte Klauen 47 auf. Für deren Axialverlagerung, zu formschlüssigem Eingriff in das axial benachbarte Ritzel 43, ist eine radial zur Zentralwelle 40 sich erstreckende Schaltgabel 49 vorgesehen. Deren U-ähnlich berandete Gabelöffnung (nicht dargestellt) greift zentripetal in eine Nut 60 ein, die um das Klauenrad 48.2 der Stirn umläuft. Dagegen versetzt ragt die Schaltgabel 49 mit einem Bolzen 59 in eine gewindeähnlich in der Mantelfläche 53 einer deshalb recht dicken Schaltwelle 54 verlaufende Kulisse 52 ein. Für das Umsteuern zwischen Eingriff und Ausgriff der Kupplungs-Klauen 47 ist die Schaltgabel 49 mittels eines Servomotors 50, erforderlichenfalls mit Untersetzungsgetriebe 57, längs der Zentralwelle 40 um einen vergleichsweise geringen Hub verschiebbar, indem der Servomotor 50, auch drehrichtungs-umsteuerbar, die Schaltwelle 54 nach Maßgabe der Kulissensteigung um einen geringen, für den Kupplungs-Hub ausreichenden Winkel verdreht. Diese achsparallele Kupplungsbewegung der Schaltgabel 49 wird längs einer zur Zentralwelle 40 und zur Schaltwelle 54 parallelen, gehäusefesten Stützsäule 51 geführt. Je nach der Drehrichtung der Schaltwelle 54 werden die Klauen 47 des Klauenrades 48.2 mit dem zugeordneten, benachbarten Ritzel 43 in Eingriff gebracht, das dadurch drehfest mit der Zentralwelle 40 verbunden wird, oder wieder außer Eingriff gebracht.

Auf diese Weise ist mit der Räderpaarung 43.2-26.2 der zweite Gang der Gangschaltung 45 aktivierbar. Für den dritten Gang ist ein drittes Räderpaar 43.3-26.3 mit eigener Kulisse 52.3 für die Axialverschiebung eines Klauenrades 48.3 vorgesehen. Die beiderseitigen achsparallelen Klauen 47 sind gegensinnig, aufeinander zu, orientiert. Dadurch kann das eine der beiden Klauenräder 48.2/48.3 außer Eingriff geraten, während beim anderen der Kupplungsvorgang greift.

In der Schaltwelle 54 ist dessen Kulisse 52.3 in Umfangsrichtung gegenüber der anderen Kulisse 52.2 drehwinkelversetzt; die Kulisse 52.3 wird deshalb erst wirksam, wenn die Schaltwelle 54 vom Servomotor 50 um einen gewissen Drehwinkel weiter gedreht wird. Damit kann zugleich, infolge nun gegensinniger Neigungen der Kulissen 52.2/52.3, der Kupplungseingriff des Klauenrades 48.2 wieder geöffnet werden. Um die Anzahl an Kupplungsbewegungen zu reduzieren, bleibt aber dieser Eingriff zweckmäßigerweise beibehalten. Dann wird der langsamere, dafür mit einem Freilauf 56 versehene zweite Gang vom schnelleren dritten Gang übertourt; bis der langsamere wieder greift.

Das Verdrehen der Schaltwelle 54 mit ihren axial gegeneinander versetzten schraubenförmigen Kulissen 52 zum Kuppeln oder Lösen der Kupplungs-Klauen 47 mit den Rädern 43 erfolgt mittels des umsteuerbaren Servomotors 50 über ein stark untersetzendes Getriebe 57; nämlich zur Drehmomentensteigerung, und da die Kulissen 52 sich nur über einen beschränkten Umfangswinkel auf der Mantelfläche 53 der Schaltwelle 54 erstrecken. Die entsprechende Ansteuerung des Servomotors 50 erfolgt aus einer, auch dessen Drehmomenten-Beitrag des Antriebes 31 abrufenden, zentralen, vom Umgehäuse 11 aufgenommenen Steuerschaltung 58 nach Maßgabe einer Auswertung des vom Messwerk 42 erfassten Drehmomentenverlaufes an der Kurbelwelle 14, um möglichst stets mit gleicher Muskelleistung bei angepasster, deshalb angenehmer Trittfrequenz zu pedalieren.

Eine für den elektromotorischen Zusatzantrieb 12 eines Fahrrades ausgelegte Gangschaltung 45 weist somit erfindungsgemäß eine Zentralwelle 40 auf, bei der die Drehmomentenbeiträge einer Kurbelwelle 14 und einer Antriebswelle 35 einander überlagert sind; wobei die Zentralwelle 40, pro Gangstufe über ein Ritzel 43 und ein damit kämmendes Triebrad 26, über die Abtriebs-Hohlwelle 27 mit einem Zugmittelrad 28 in Drehverbindung steht oder verbringbar ist. In der kleinsten der Gangstufen dieser Gangschaltung 45, also im ersten Gang, ist das Ritzel 43 drehstarr mit der Zentralwelle 40 verbunden, in den anderen, höheren Gangstufen sind deren Ritzel 43 auf der Zentralwelle 40 verdrehbar wälzgelagert. Ab der zweiten der Gangstufen ist zwischen der Zentralwelle 40 und dem zugeordneten der Ritzel 43 eine formschlüssige Kupplung 46 mit einem Kupplungsrad wirksam, insbesondere ausgelegt in Form eines auf der Zentralwelle 40 drehfesten aber axial verlagerbaren Klauenrades 48.2. Das Klauenrad 48.2, also die Kupplung 46, ist bevorzugt mittels einer von einem Servomotor 50 verdrehbaren Schaltwelle 54 über eine Schaltgabel 49 durch Verschieben längs der Zentralwelle 40 umsteuerbar. Die Schaltgabel 49 wird dabei von einer zu den Achsen der Zentralwelle 40 und der Schaltwelle 54 parallelen Stützsäule 51 quer geführt. Die Schaltgabel 49 greift für das Umsteuern der Kupplung 46 in eine gewindeähnliche Kulisse 52 in der Mantelfläche 53 der Schaltwelle 54 und außerdem in eine längs der Stirn des zugeordneten Klauenrades 48 umlaufende Nut 60 ein. Außer in der höchsten Gangstufe ist jeweils zwischen der mit dem Zugmittelrad 28 bestückten Abtriebs-Welle 27 und den Triebrädern 26 ein Freilauf 56 eingebaut. Dadurch werden vom momentan schnellsten der Gänge die langsameren übertourt. Bei abfallender Geschwindigkeit übernimmt, auch unter Last, die nächst langsamere Gangstufe den Antrieb des Zugmittelrades 28. Zum Betreiben des Zusatz-Antriebes 31 und des Gangwechsel-Servomotors 50 ist eine Steuerschaltung 58 vorgesehen, die nach Maßgabe der aktuellen Betriebswerte beaufschlagbar ist, insbesondere hinsichtlich des von der Kurbelwelle 14 gerade anstehenden Drehmomentes, aber auch etwa daraus ableitbarer Betriebswerte wie der Trittfrequenz oder der Fahrgeschwindigkeit. Für diese automatische Gangschaltung 45 sind deshalb keine Sensoren oder Steuerelemente außerhalb des Umgehäuses 11 erforderlich.

### Bezugszeichenliste

- 11: Umgehäuses (für 12)
- 12: Zusatzantrieb (mit 31)
- 13: Tretlager (für 14 in 11)
- 14: Kurbelwelle (durch13-13/11 hindurch)
- 15: Übersetzungsgetriebe (für 14)
- 16: Stirnrad (an 14)
- 17: --
- 18: --
- 19: --
- 20: --
- 21: --
- 22: --
- 23: --
- 24: --
- 25: Koppelrad (an 40)
- 26: 26.i Triebräder (an 27; zwischen 43 und 27/28): i = 1, 2, 3
- 27: Hohlwelle (als Abtriebswelle über 14)
- 28: Zugmittelrad (an 27)
- 29: Zugmittel (über 28)
- 30: --
- 31: Antrieb (von 12)
- 32: Untersetzungsgetriebe (für 31)
- 33: --
- 34: --
- 35: Antriebswelle (von 31)
- 36: --
- 37: --
- 38: --
- 39: --
- 40: Zentralwelle (mit 25)
- 41: --
- 42: Messwerk (in 11 für 14)
- 43: 43.i Ritzel (zwischen 40 und 26); i = 1, 2, 3
- 44: Wälzlager (zwischen 27 und 14)
- 45: Gangschaltung (zwischen 40 und 27-28)
- 46: Kupplung (zwischen 40 und 43, 26, 27, 28)
- 47: Klauen (an 48.i, zum Eingriff in 43)
- 48: 48.i Klauenräder (als Kupplungsräder zwischen 40 und 43); i = 2, 3
- 49: Schaltgabel (zwischen 54 und 48.i)
- 50: Servomotor (für 54)
- 51: Stützsäule (für 49, an 11 parallel 40/58)
- 52: 52.i Kulissen (in 53/54 für 49/59); i = 2, 3
- 53: Mantelfläche (von 54, mit 52)
- 54: Schaltwelle (für 49)
- 55: --
- 56: Freiläufe (zwischen 27 und 26, zum Übertouren der niedrigeren Gänge)
- 57: Getriebe (von 50)
- 58: Steuerschaltung (hinter 42, für 31 und 50)
- 59: Bolzen (an 49 zum Eingriff in 52)
- 60: Nut (an 48.i umlaufend, zum Eingriff von 49)
- 61: Wälzlager (zwischen 40 und 43)

## Patentansprüche

1. Gangschaltung (45), ausgelegt für einen elektromotorischen Fahrrad-Zusatzantrieb (12), bei dem die Drehmomentenbeiträge einer Kurbelwelle (14) und einer Antriebswelle (35) einander überlagert ein Zugmittelrad (28) antreiben, **dadurch gekennzeichnet, dass** eine von den beiden Drehmomentenbeiträgen beaufschlagte Zentralwelle (40) für mehr als eine Gangstufe koaxial mit mehr als einem Ritzel (43) ausgestattet ist, das jeweils über ein damit kämmendes Triebrad (26) mit dem Zugmittelrad (28) in Drehverbindung steht, wobei in einer gegenüber der untersten Gangstufe höheren Gangstufe zwischen der Zentralwelle (40) und dem dieser Gangstufe zugeordneten, auf der Zentralwelle (40) gelagerten Ritzel (43) ein umsteuerbarer Kupplungseingriff vorgesehen ist.

2. Gangschaltung nach Anspruch 1, **dadurch gekennzeichnet, dass** der Kupplungseingriff mittels einer Kulisse (52) in einer verdrehbaren Schaltwelle (54) umsteuerbar ist.

3. Gangschaltung nach dem vorangehenden Anspruch, **gekennzeichnet durch** eine von einem Servomotor (50) verdrehbare Schaltwelle (54) für den umsteuerbaren Kupplungseingriff.

4. Gangschaltung nach einem der beiden vorangehenden Ansprüche, **dadurch gekennzeichnet, dass** eine Schaltgabel (49), quer geführt von einer zu den Achsen der Zentralwelle (40) und der Schaltwelle (54) parallelen Stützsäule (51), einerseits in die Kulisse (52) in einer Mantelfläche (53) der Schaltwelle (54) und andererseits in eine längs der Stirn eines Kupplungsrades umlaufende Nut (60) eingreift.

5. Gangschaltung nach einem der vorangehenden Ansprüche, **dadurch gekennzeichnet, dass** eine formschlüssige Kupplung (46) mit einem, mit der Zentralwelle (40) in Drehverbindung stehenden, als Klauenrad (48.2) ausgelegtem Kupplungsrad vorgesehen ist.

6. Gangschaltung nach dem vorangehenden Anspruch, **dadurch gekennzeichnet, dass** das Kupplungsrad mit achsparallelen Klauen (47) zu Eingriff in das Ritzel (43) ausgelegt ist, welches auf der Zentralwelle (40) drehbar gelagert ist.

7. Gangschaltung nach einem der vorangehenden Ansprüche, **dadurch gekennzeichnet, dass** - außer in der höchsten Gangstufe - zwischen einer mit dem Zugmittelrad (28) ausgestatteten Welle und dem Triebrad (26) ein Freilauf (56) vorgesehen ist.

8. Gangschaltung nach einem der vorangehenden Ansprüche, **gekennzeichnet durch** eine auf der Kurbelwelle (14) wälzgelagerte Hohlwelle (27) zwischen dem Zugmittelrad (28) und den damit koaxialen, axial gegeneinander versetzten Triebrädern (26).

9. Gangschaltung nach einem der vorangehenden Ansprüche, **dadurch gekennzeichnet, dass** sie mindestens zweigängig ausgelegt ist, wobei von den Ritzeln (45) nur dasjenige des kleinsten Ganges kupplungslos drehfest mit der Zentralwelle (40) verbunden oder verbindbar ist und wobei nur das Triebrad (26) des größten Ganges freilauflos drehfest mit dem Zugmittelrad (28) verbunden oder verbindbar ist.

10. Gangschaltung nach einem der Ansprüche 3 bis 9, **dadurch gekennzeichnet, dass** zum Betreiben des Antriebes (31) und des Servomotors (50) eine Steuerschaltung (58) vorgesehen ist, die nach Maßgabe des von der Kurbelwelle (14) gerade anstehenden Drehmomentes und gegebenenfalls auch davon abgeleiteter Betriebswerte beaufschlagt ist.

## Claims

1. Gearshift system (45) configured for an electromotive motorcycle auxiliary drive (12) in which the torque contributions of a crankshaft (14) and of a drive shaft (35), superposed on one another, drive a traction mechanism pulley (28), **characterized in that** a central shaft (40) which is acted on by both torque contributions is, for more than one gear stage, equipped coaxially with more than one pinion (43) which, in each case by means of a drive wheel (26) meshing therewith, is rotationally connected to the traction mechanism pulley (28), wherein, in a gear stage higher than the lowermost gear stage, reversible clutch engagement is provided between the central shaft (40) and the pinion (43) assigned to said gear stage and mounted on the central shaft (40).

2. Gearshift system according to Claim 1, **characterized in that** the clutch engagement is reversible by means of a slotted guide (52) in a rotatable shift shaft (54) .

3. Gearshift system according to the preceding claim, **characterized by** a shift shaft (54), which is rotatable by a servo motor (50), for the reversible clutch engagement.

4. Gearshift system according to either of the two preceding claims, **characterized in that** a shift fork (49), guided transversely by a support column (51) which is parallel to the axes of the central shaft (40) and of the shift shaft (54), engages at one side into the slotted guide (52) in a shell surface (53) of the shift shaft (54) and engages at the other side into a groove (60) running along the face of a clutch wheel.

5. Gearshift system according to any of the preceding claims, **characterized in that** a positively locking clutch (46) is provided, said clutch having a clutch wheel which is rotationally connected to the central shaft (40) and which is designed as a dog wheel (48.2).

6. Gearshift system according to the preceding claim, **characterized in that** the clutch wheel is designed with axially parallel dogs (47) for engagement into the pinion (43) which is mounted rotatably on the central shaft (40).

7. Gearshift system according to any of the preceding claims, **characterized in that** - other than in the highest gear stage - a freewheel (56) is provided between the shaft, which is equipped with the traction mechanism pulley (28), and the drive wheel (26) .

8. Gearshift system according to any of the preceding claims, **characterized by** a hollow shaft (27), mounted by means of rolling bearings on the crankshaft (14), between the traction mechanism pulley (28) and the axially mutually offset drive wheels (26) which are coaxial with respect to said traction mechanism pulley.

9. Gearshift system according to any of the preceding claims, **characterized in that** said gearshift system is configured with at least two gears, wherein, of the pinions (45), only that of the lowest gear is connected or connectable rotationally conjointly to the central shaft (40) without the use of a clutch, and wherein only the drive wheel (26) of the highest gear is connected or connectable rotationally conjointly to the traction mechanism pulley (28) without the use of a freewheel.

10. Gearshift system according to any of Claims 3 to 9, **characterized in that**, for the operation of the drive (31) and of the servo motor (50), a control circuit (58) is provided which is acted on in accordance with the torque presently incoming from the crankshaft (14) and possibly also in accordance with operational values derived therefrom.

## Revendications

1. Mécanisme de changement de rapport (45), conçu pour un mécanisme d'entraînement supplémentaire (12) de bicyclette motorisée, avec lequel les apports de couple d'un vilebrequin (14) et d'un arbre d'entraînement (35) sont superposés l'un à l'autre et entraînent une roue de moyen de traction (28), **caractérisé en ce qu'**un arbre central (40) pour plus d'un rapport de vitesse, sollicité par les deux apports de couple, est équipé de manière coaxiale de plus d'un pignon (43), lequel se trouve en liaison de rotation avec la roue de moyen de traction (28) respectivement par le biais d'une roue motrice (26) qui s'engrène avec celui-ci, mécanisme avec lequel, dans un rapport de vitesse supérieur au rapport de vitesse le plus bas, une prise d'accouplement réversible se trouve entre l'arbre central (40) et le pignon (43) associé à ce rapport de vitesse qui est monté sur l'arbre central (40) .

2. Mécanisme de changement de rapport selon la revendication 1, **caractérisé en ce que** la prise d'accouplement peut être inversée au moyen d'une coulisse (52) dans un arbre de commande (54) pouvant être mis en rotation.

3. Mécanisme de changement de rapport selon la revendication précédente, **caractérisé par** un arbre de commande (54) qui peut être mis en rotation par un servomoteur (50) pour la prise d'accouplement réversible.

4. Mécanisme de changement de rapport selon l'une des deux revendications précédentes, caractérisé en qu'une fourche de commande (49), guidée transversalement par une colonne d'appui (51) parallèle aux axes de l'arbre central (40) et de l'arbre de commande (54), vient en prise d'un côté dans la coulisse (52) dans une enveloppe (53) de l'arbre de commande (54) et de l'autre côté dans une rainure (60) circonférentielle le long du front d'une roue d'accouplement.

5. Mécanisme de changement de rapport selon l'une des revendications précédentes, **caractérisé par** la présence d'un accouplement à complémentarité de formes (46) comprenant une roue d'accouplement réalisée sous la forme d'une roue à griffes (48.2) qui se trouve en liaison de rotation avec l'arbre central (40).

6. Mécanisme de changement de rapport selon la revendication précédente, **caractérisé en ce que** la roue d'accouplement est conçue avec des griffes (47) parallèles à l'axe pour venir en prise dans le pignon (43), lesquelles sont montées à rotation sur l'arbre central (40).

7. Mécanisme de changement de rapport selon l'une des revendications précédentes, **caractérisé en ce que** sauf dans le rapport de vitesse le plus élevé, un élément de roue libre (56) se trouve entre un arbre équipé de la roue de moyen de traction (28) et la roue motrice (26).

8. Mécanisme de changement de rapport selon l'une des revendications précédentes, **caractérisé par** un arbre creux (27) monté sur roulement sur le vilebrequin (14) entre la roue de moyen de traction (28) et les roues motrices (26) coaxiales à celle-ci et décalées dans le sens axial les unes par rapport aux autres.

9. Mécanisme de changement de rapport selon l'une des revendications précédentes, **caractérisé en ce qu'**il est réalisé avec au moins deux rapports, avec lequel, parmi les pignons (45), seul celui du plus petit rapport est relié ou peut être relié sans accouplement en rotation solidaire avec l'arbre central (40) et avec lequel seule la roue motrice (26) du plus grand rapport est reliée ou peut être reliée sans roue libre en rotation solidaire avec la roue de moye de traction (28).

10. Mécanisme de changement de rapport selon l'une des revendications 3 à 9, qu'un circuit de commande (58) est présente pour faire fonctionner le mécanisme d'entraînement (31) et le servomoteur (50), lequel peut être sollicité en fonction du couple momentanément appliqué par le vilebrequin (14) et, le cas échéant, également de valeurs opérationnelles qui en sont dérivées.
